# EUROPÄISCHE PATENTSCHRIFT

(11) **EP 2 589 945 B1**
(45) Veröffentlichungstag und Bekanntmachung des Hinweises auf die Patenterteilung: **20.06.2018**
(21) Anmeldenummer: 12185006.9
(22) Anmeldetag: 19.09.2012
(51) Int. Cl.: G01L 19/14, G01L 13/02, G01L 19/04

(54) **Vorrichtung zur Erfassung eines Drucks eines fluiden Mediums**
Device for detecting a pressure of a fluid medium
Dispositif de détermination d'une pression d'un milieu de fluide

(30) Priorität: 03.11.2011 DE 102011085652
(43) Veröffentlichungstag der Anmeldung: 08.05.2013
(73) Patentinhaber: ROBERT BOSCH GMBH, 70442 Stuttgart (DE)
(72) Erfinder: Jahrsdoerfer, Bernd, 37293 Herleshausen (DE); Roehler, Andreas, 99817 Eisenach (DE); Vollert, Jens, 99974 Muehlhausen (DE)

(56) Entgegenhaltungen:
- EP-A1- 2 375 232
- WO-A1-88/01049
- WO-A1-2006/061036
- US-A- 5 029 479

## Beschreibung

### Stand der Technik

Die Erfindung geht aus von bekannten Vorrichtungen zur Erfassung eines Drucks eines fluiden Mediums. Bei dem fluiden Medium kann es sich grundsätzlich um Gase und/oder Flüssigkeiten handeln, insbesondere um Luft.

Aus dem Stand der Technik sind zahlreiche Vorrichtungen zur Erfassung eines Drucks eines fluiden Mediums bekannt. Die Erfindung wird im Folgenden, ohne Beschränkung weiterer möglicher Ausgestaltungen, insbesondere beschrieben unter Bezugnahme auf eine Erfassung eines Drucks eines fluiden Mediums durch einen Niederdrucksensor. Aus dem Stand der Technik sind insbesondere Niederdrucksensoren bekannt, welche beispielsweise mindestens ein Sensorelement, insbesondere ein geschütztes Sensorelement, beispielsweise ein durch Gel und/oder mindestens einen Premold geschütztes Sensorelement, umfassen, wobei das Sensorelement bevorzugt in ein Kunststoffgehäuse gesetzt sein kann. Derartige Drucksensoren sind beispielsweise von der Robert Bosch GmbH, Deutschland, unter der Typenbezeichnung DS-X2 oder DS-X3 kommerziell erhältlich. Beispielsweise kann das Sensorelement auf einen Keramikschaltungsträger gesetzt sein. Das Sensorelement und/oder der Keramikschaltungsträger kann beispielsweise durch Ball-Wedge-Bonden zu einem Schaltungsträger kontaktiert sein. Das Sensorelement und/oder die Bonden können durch Gel geschützt sein. Eine elektrische Kontaktierung, insbesondere nach außen, kann durch Bonden vom Schaltungsträger zu einem eingespritzten Stanzgitter erfolgen.

Das Sensorelement kann ebenfalls zumindest teilweise von mindestens einem Premold umfasst sein. Das Sensorelement kann in ein Kunststoffgehäuse geklebt und mittels Bonden mit einem eingespritzten Stanzgitter elektrisch verbunden sein. Der so entstandene Premold kann mittels Widerstandsschweißen zum Stanzgitter des Gehäuses verbunden sein.

Aus DE 10 2006 026 881 A1 ist ein mikromechanisches Bauelement mit einem Sensorelement und einer ersten und einer zweiten Einfassung, wobei das Sensorelement mittels der ersten Einfassung in einem ersten Bereich wenigstens teilweise mit einem Passivierungsmaterial bedeckt ist, bekannt. Die zweite Einfassung ist wenigstens teilweise derart auf dem Sensorelement angeordnet, dass auf dem Sensorelement ein vom ersten Bereich abgetrennter zweiter Bereich umschlossen wird.

Aus DE 102 23 357 A1 ist eine Vorrichtung zur Druckmessung bekannt. Die Vorrichtung weist drei Gehäuseräume auf, wobei beispielsweise der dritte Gehäuseraum über einen zweiten Druckkanal mit einem Messdruck beaufschlagbar ist, der von unten auf ein Sensorelement einwirkt. Der erste Gehäuseraum ist über einen ersten Druckkanal mit einem Referenzdruck beaufschlagbar, der von oben auf das Sensorelement einwirkt. Die Vorrichtung kann beispielsweise zur Differenzdruckmessung eingesetzt werden.

Aus DE 10 2006 026 881 A1 und der DE 102 23 357 A1 ist insbesondere ein Dichtschwert an einem Deckel mit einer Klebung auf einem Träger zur Erzeugung zweier Druckräume bekannt.

Aus DE 44 15 984 A1 ist ein Halbleitersensor mit Schutzschicht bekannt, insbesondere ein Halbleiterchip mit an der Rückseite angeordneten Kavernen, in welchen der Druck durch entsprechend ausgebildete Membranen, die mit piezosensitiven Schaltungen in Verbindung stehen, gemessen wird. Die Kavernenoberfläche wie auch wahlweise die Rückseite des Halbleiterchips sind mit einer Schutzschicht überzogen, die einen Schutz des Halbleiters gegenüber aggressiven Medien gewährleistet.

In DE 42 27 893 A1 wird ein Differenzdrucksensor, der zwei Halbleitermembranen hat, deren Unterseiten jeweils unabhängig voneinander von einem Druck p1 bzw. p2 beaufschlagt werden, offenbart. Die Oberseiten der Halbleitermembranen sind jeweils mit einem Sensorelement versehen. Die empfindlichen Oberseiten der Membranen befinden sich in einem geschützten Raum, während die Beaufschlagung der Membranen mit den zu bestimmenden Drücken an deren unempfindlichen Unterseiten erfolgt.

Bekannte Vorrichtungen zur Erfassung eines Drucks eines fluiden Mediums weisen jedoch eine Mehrzahl an technischen Herausforderungen auf. Bei Niederdrucksensoren sollte beispielsweise eine Reihe von Randbedingungen eingehalten werden, um die Funktion auch über Lebensdauer zu gewährleisten. Das Sensorelement, insbesondere das Drucksensorelement, sollte bevorzugt mit einem Auswertebauelement und weiteren Bauelementen elektrisch verbunden sein und mehrere Kontaktmöglichkeiten nach außen bieten. Weiterhin wäre es wünschenswert, dass mit der Vorrichtung, insbesondere mit einem Aufbaukonzept für eine Vorrichtung, insbesondere durch kleine Änderungen, sowohl Absolutdruckmessungen als auch Differenzdruckmessungen realisierbar sind. Wünschenswert wäre weiterhin ein geeignetes Aufbaukonzept, welches möglichst viele Anforderungen erfüllt, beispielsweise: eine Medienbeständigkeit, insbesondere eine Beständigkeit gegen aggressive und/oder korrosive Medien; die Möglichkeit einer Absolutdruckmessung und/oder einer Differenzdruckmessung; die Realisierung einer Sent-Schnittstelle; die Realisierung einer NTC-Anbindung; eine Kostenreduzierung. Um beispielsweise Herstellungskosten so gering wie möglich zu halten, sollte beispielsweise das Drucksensorelement möglichst direkt in ein Kunststoffgehäuse mit Druckanschlüssen geklebt werden. Dies ist üblicherweise technisch aufgrund verschiedener Ausdehnungskoeffizienten und so entstehender thermomechanischer Spannungen nicht realisierbar.

Aus der WO 88/01049 A1 ist ein Differenzdrucksensor bekannt, der ein Gehäuse und einen Druckraum aufweist, in dem ein Drucksensorelement aufgenommen ist. Zwischen dem Gehäuse und dem Drucksensorelement ist ein Ausgleichselement angeordnet, das eine erste Öffnung aufweist, über welche das Drucksensorelement mit Druck beaufschlagbar ist. Das Ausgleichselement weist eine zweite Öffnung auf, über die der Druckraum und das Drucksensorelement mit einem zweiten Druck beaufschlagbar ist. Der Druckraum wird teilweise durch eine in das Gehäuse eingebrachte Kappe begrenzt, die auf das Drucksensorelement aufgesetzt ist.

Ein Differenzdrucksensor mit einer über einem Drucksensorelement angeordneten Kappe ist weiterhin auch aus der US 5 029 479 A bekannt.

Aus der WO 2006/061036 A1 ist ein Verfahren zur Herstellung eines Messumformers bekannt, bei dem ein Differenzdrucksensor in einem Schichtsubstrat vergraben wird. Der Differenzdrucksensor wird beidseitig über Druckkanäle mit trichterförmigen Ausnehmungen druckgekoppelt. Diese trichterförmigen Ausnehmungen können über Trennmembranen mit Druck beaufschlagt werden.

Aus der EP 2 375 232 A1 ist weiterhin eine Vorrichtung zur Erfassung eines Drucks bekannt, wobei die Vorrichtung ein Gehäuse mit einem Druckraum aufweist, wobei in dem Druckraum mindestens ein Drucksensorelement aufgenommen ist, wobei die Vorrichtung zwischen dem Gehäuse und dem Drucksensorelement mindestens ein Ausgleichselement zum Ausgleich thermomechanischer Spannungen aufweist, wobei das Drucksensorelement zumindest teilweise mit dem Ausgleichselement verbunden ist, wobei das Ausgleichselement mindestens eine erste Öffnung aufweist, wobei das Drucksensorelement über die erste Öffnung mit einem ersten Druck beaufschlagbar ist und wobei das Ausgleichselement weiterhin mindestens eine zweite Öffnung aufweist, wobei über die zweite Öffnung der Druckraum und das Drucksensorelement mit mindestens einem zweiten Druck beaufschlagbar sind, wobei der Druckraum zumindest teilweise durch eine in das Gehäuse eingebrachte Kappe begrenzt wird, wobei die Kappe teilweise auf das Drucksensorelement und das Ausgleichselement aufgesetzt ist,

### Offenbarung der Erfindung

Es wird daher eine Vorrichtung zur Erfassung eines Drucks eines fluiden Mediums, insbesondere ein Niederdrucksensor, vorgeschlagen, welcher die Nachteile bekannter Vorrichtungen vermeidet und die oben genannten technischen Herausforderungen erfüllen kann. Die Erfindung geht grundsätzlich aus von den oben beschriebenen Vorrichtungen, so dass es sich beispielsweise bei dem fluiden Medium um ein oder mehrere Gase und/oder Flüssigkeiten, insbesondere um Luft, handeln kann. Bei dem Druck kann es sich insbesondere um einen Partialdruck und/oder einen Absolutdruck und/oder einen Differenzdruck und/oder um ein Druckprofil und/oder eine Druckentwicklung, beispielsweise über die Zeit, handeln. Beispielsweise kann es sich bei dem Druck auch um mehrere Drücke handeln, beispielsweise auch um eine Differenz mehrerer Drücke.

Die Vorrichtung weist mindestens ein Gehäuse mit mindestens einem Druckraum auf. Bei dem Gehäuse kann es sich prinzipiell um eine Vorrichtung handeln, welche eingerichtet ist, um Komponenten der Vorrichtung aufzunehmen und/oder insbesondere gegenüber Umwelteinflüssen zu schützen. Insbesondere kann das Gehäuse aus Kunststoff hergestellt sein. Andere Ausgestaltungen des Gehäuses sind ebenfalls möglich. Bei dem Druckraum kann es sich prinzipiell um einen beliebigen Raum handeln, welcher bevorzugt keine elektronischen Bauteile umfasst und zumindest teilweise abgeschlossen ist, insbesondere gegenüber der Umwelt. Der Druckraum kann insbesondere ein Raum sein in welchem mindestens ein Druck des fluiden Mediums herrscht, welcher von der Vorrichtung erfasst wird.

In dem Druckraum ist mindestens ein Drucksensorelement aufgenommen. Bei dem Drucksensorelement kann es sich prinzipiell um ein beliebiges Sensorelement handeln, welches eingerichtet ist, um mindestens einen Druck eines fluiden Mediums zu erfassen. Bei dem Drucksensorelement kann es sich insbesondere um einen Chip handeln. Bei dem Drucksensorelement kann es sich beispielsweise um einen Drucksensor handeln, wie er aus Robert Bosch GmbH: Sensoren im Kraftfahrzeug, 1. Auflage 2010, Seiten 80-82, bekannt ist. Bei dem Drucksensorelement kann es sich bevorzugt um einen Membransensor handeln, welcher insbesondere eine dünne Membran als mechanische Zwischenstufe aufweisen kann, welche beispielsweise einseitig dem Druck des fluiden Mediums ausgesetzt ist und sich unter dessen Einfluss mehr oder weniger durchbiegt. Auch andere Drucksensorelemente können prinzipiell eingesetzt werden.

Erfindungsgemäß weist die Vorrichtung mindestens einen Schaltungsträger zur Aufnahme mindestens einer mit dem Drucksensorelement verbundenen Ansteuer- und Auswerteschaltung auf, wobei das Ausgleichselement mit dem Drucksensorelement und dem Schaltungsträger in einem Trägerelement zusammengefasst ist, wobei das Trägerelement in das Gehäuse eingebracht ist und ebenfalls die erste Öffnung und die zweite Öffnung aufweist. Das Ausgleichselement ist eingerichtet, um mechanische Spannungen zwischen dem Drucksensorelement und dem Trägerelement zu reduzieren oder zu verhindern und umfasst ausschließlich Materialien, deren thermischer Ausdehnungskoeffizient zwischen dem thermischen Ausdehnungskoeffizient des Trägerelementes und dem thermischen Ausdehnungskoeffizienten des Drucksensorelements liegt.

Bei dem Ausgleichselement handelt es sich um eine Vorrichtung, welche eingerichtet ist, um mechanische Spannungen, beispielsweise ausgelöst durch Temperaturänderungen, zwischen dem Drucksensorelement und dem Trägerelement zu reduzieren oder zu verhindern. Bei dem Ausgleichselement handelt es sich um mindestens ein thermomechanisches Ausgleichselement. Das Ausgleichselement kann beispielsweise Glas und/oder Keramik umfassen.
Das Drucksensorelement ist zumindest teilweise mit dem Ausgleichselement verbunden. Unter "verbunden" kann insbesondere verstanden werden, dass das Drucksensorelement mechanisch mit dem Ausgleichselement verbunden ist. Beispielsweise kann das Drucksensorelement auch über mindestens eine Klebeschicht, beispielsweise zur Befestigung des Drucksensorelements auf dem Ausgleichselement, verbunden sein. Prinzipiell kann das Drucksensorelement insbesondere auf dem Ausgleichselement montiert sein. Beispielsweise kann sich zwischen dem Drucksensorelement und dem Ausgleichselement ein weiteres Element befinden, insbesondere eine Klebeschicht und/oder ein weiteres Ausgleichselement und/oder mindestens ein Träger.

Das Ausgleichselement weist mindestens eine erste Öffnung auf. Bei der ersten Öffnung kann es sich prinzipiell um eine beliebige Öffnung handeln, insbesondere ausgewählt aus: mindestens einer Bohrung, insbesondere einer Durchgangsbohrung; mindestens einem Loch; mindestens einem Langloch; mindestens einer Aussparung; mindestens einem Schacht; mindestens einer Durchführung; mindestens einer Durchleitung; mindestens einer Durchgangsöffnung. Die Öffnung kann prinzipiell einen beliebigen Querschnitt aufweisen, beispielsweise einen zumindest teilweise runden Querschnitt und/oder einen Querschnitt mit mindestens einer Ecke. Beispielsweise kann die Öffnung einen quadratischen oder rechteckförmigen oder vieleckförmigen Querschnitt aufweisen.

Das Drucksensorelement ist über die erste Öffnung mit einem ersten Druck beaufschlagbar. Unter dem ersten Druck kann prinzipiell ein beliebiger Druck des fluiden Mediums verstanden werden, prinzipiell kann auch ein Außendruck oder ein Referenzdruck, beispielsweise der Druck einer Außenluft, unter dem ersten Druck verstanden werden. Unter "beaufschlagbar" kann insbesondere verstanden werden, dass in der Öffnung der gleiche erste Druck herrscht wie der erste Druck, welcher gemessen werden soll. Bevorzugt kann das Drucksensorelement über die erste Öffnung derart mit dem fluiden Medium, welches den ersten Druck aufweist, verbunden sein, dass der erste Druck von dem Drucksensorelement, beispielsweise der Membran des Drucksensorelements, erfasst werden kann. Die erste Öffnung kann insbesondere als fluidische Verbindung ausgestaltet sein.

Das Ausgleichselement weist weiterhin mindestens eine zweite Öffnung auf. Die zweite Öffnung kann prinzipiell wie die erste Öffnung ausgestaltet sein. Die erste Öffnung kann bevorzugt getrennt von der zweiten Öffnung ausgebildet sein. Prinzipiell kann die erste Öffnung aber auch mit der zweiten Öffnung verbunden, insbesondere fluidisch verbunden, sein. Beispielsweise kann die erste Öffnung auch reversibel mit der zweiten Öffnung verbunden sein, beispielsweise zur Durchführung einer Kalibration und/oder eines Abgleichs.

Über die zweite Öffnung sind der Druckraum und das Drucksensorelement mit mindestens einem zweiten Druck beaufschlagbar. Der zweite Druck kann prinzipiell wie der erste Druck definiert werden. Der zweite Druck kann sich bevorzugt von dem ersten Druck unterscheiden, kann jedoch auch mit dem ersten Druck übereinstimmen, beispielsweise ebenfalls zur Durchführung einer Kalibration und/oder eines Abgleichs. Bei der ersten Öffnung oder der zweiten Öffnung kann es sich prinzipiell um eine offene Stelle in einer ansonsten geschlossenen Fläche, insbesondere einer Fläche des Ausgleichselements, handeln.

Die zweite Öffnung kann bevorzugt eine Durchgangsöffnung sein. Die zweite Öffnung kann insbesondere ausgewählt sein aus: mindestens einer Bohrung, insbesondere einer Durchgangsbohrung; mindestens einem Loch; mindestens einem Langloch; mindestens einer Aussparung; mindestens einem Schacht; mindestens einer Durchführung; mindestens einer Durchleitung. Die zweite Öffnung kann insbesondere einen Querschnitt aufweisen, welcher zumindest teilweise rund ausgestaltet sein kann. Der Querschnitt der zweiten Öffnung kann alternativ oder zusätzlich auch mindestens eine Ecke aufweisen. Beispielsweise kann der Querschnitt der zweiten Öffnung quadratisch oder rechteckförmig oder vieleckförmig sein. Im Gegensatz zu der zweiten Öffnung kann die erste Öffnung bevorzugt nicht als Durchgangsöffnung ausgestaltet sein. Unter einer Durchgangsöffnung kann insbesondere eine Öffnung verstanden werden, welche an mindestens zwei Seiten an eine weitere Öffnung und/oder einen offenen Raum anschließt und/oder zumindest fluidisch verbunden ist.

Die zweite Öffnung kann zumindest teilweise auch das Drucksensorelement durchdringen. Das Drucksensorelement kann hierbei beispielsweise ebenfalls mindestens eine Öffnung aufweisen, welche mit der zweiten Öffnung zumindest fluidisch verbunden sein kann. Bei der zweiten Öffnung kann es sich hierbei insbesondere um eine Durchgangsöffnung zu der Öffnung des Drucksensorelements handeln. Unter dem Ausdruck "durchdringen" kann verstanden werden, dass auch die Öffnung des Drucksensorelements bevorzugt als Durchgangsöffnung ausgestaltet sein kann. Beispielsweise kann das fluide Medium oder zumindest ein Teil des fluiden Mediums über die zweite Öffnung durch das Drucksensorelement in einen weiteren Raum, beispielsweise in den Druckraum gelangen.

Das Drucksensorelement kann die erste Öffnung zumindest teilweise verschließen. Das Drucksensorelement kann bevorzugt die erste Öffnung derartig verschließen, dass die erste Öffnung keine Durchgangsöffnung ist. Beispielsweise kann das Drucksensorelement die erste Öffnung insbesondere abdecken, beispielsweise mit einer abdeckenden Membran. Beispielsweise kann die Membran die erste Öffnung derart abdecken, dass mit dieser Membran der erste Druck gemessen werden kann. Unter "teilweise verschließen" kann beispielsweise eine Verjüngung eines Querschnitts der ersten Öffnung, insbesondere zu dem Drucksensorelement hin, verstanden werden. Bevorzugt kann das Drucksensorelement, insbesondere die Membran, die erste Öffnung vollständig verschließen.

Das Ausgleichselement kann als planares Element ausgestaltet sein. Unter einem planaren Element kann insbesondere ein flaches Element verstanden werden, wobei beispielsweise eine Dicke des Ausgleichselements wesentlich geringer sein kann als eine laterale Ausdehnung. Bei dem Ausgleichselement kann es sich insbesondere um einen planaren Schaltungsträger und/oder einen planaren Chip handeln. Das planare Element, insbesondere das Ausgleichselement, kann beispielsweise zumindest teilweise aus Keramik und/oder Glas und/oder Metall und/oder Kunststoff aufgebaut sein. Das Ausgleichselement, insbesondere als planares Element, kann beispielsweise eine rechteckige Grundfläche aufweisen. Prinzipiell können auch andere Ausgestaltungen des Ausgleichselements möglich sein.

Das Gehäuse kann mindestens einen ersten Druckanschluss aufweisen. Unter einem Druckanschluss, insbesondere dem ersten Druckanschluss, kann insbesondere eine Vorrichtung verstanden werden, welche einen Druck weitergeben kann, insbesondere eine Vorrichtung, welche keinen Widerstand für das fluide Medium darstellt, so dass an zwei Enden des Druckanschlusses, insbesondere des ersten Druckanschlusses, der gleiche Druck herrscht. Bei einem Druckanschluss, insbesondere dem ersten Druckanschluss, kann es sich bevorzugt um ein Rohr und/oder eine andere Vorrichtung mit mindestens zwei Öffnungen handeln, welche fluidisch miteinander verbunden sein können. Der erste Druckanschluss kann bevorzugt mit der ersten Öffnung verbunden sein. Unter "verbunden sein" kann insbesondere verstanden werden, dass eine Verbindung derart ausgestaltet ist, dass an beiden Enden der Verbindung üblicherweise der gleiche Druck herrscht. Bevorzugt kann eine Verbindung vorliegen, welche dem fluiden Medium keinen Widerstand entgegensetzt. Der erste Druckanschluss kann direkt mit der ersten Öffnung verbunden sein, kann jedoch auch über mindestens eine andere Komponente mit der ersten Öffnung verbunden sein. Das Gehäuse kann weiterhin mindestens einen zweiten Druckanschluss aufweisen. Der zweite Druckanschluss kann prinzipiell auch als Druckanschluss, wie beispielsweise der erste Druckanschluss, ausgestaltet sein. Der erste Druckanschluss und der zweite Druckanschluss, können beispielsweise baugleich ausgestaltet sein, prinzipiell kann der erste Druckanschluss auch anders als der zweite Druckanschluss ausgestaltet sein. Der zweite Druckanschluss kann bevorzugt mit der zweiten Öffnung verbunden sein. Der Druckanschluss, insbesondere der erste Druckanschluss und/oder der zweite Druckanschluss können insbesondere derart ausgestaltet sein, dass an mindestens einer Seite ein Schlauch zur Beaufschlagung mit dem fluiden Medium und/oder ein Rohr angeschlossen werden kann. Der Druckanschluss kann insbesondere als Adapter ausgestaltet sein.

Der Druckraum wird bei erfindungsgemäßen Vorrichtung zumindest teilweise durch eine in das Gehäuse eingebrachte Kappe begrenzt werden. Bei der Kappe kann es sich beispielsweise um mindestens einen Deckel handeln. Die Kappe kann insbesondere eingerichtet sein, um den Druckraum gegen mindestens einen anderen Raum, bevorzugt druckdicht und/oder fluiddicht, abzudichten. Die Kappe kann zumindest teilweise eckig und/oder rund sein, beispielsweise als Hohlquader mit mindestens einer Öffnung, bevorzugt mit einer offenen Seite. Prinzipiell kann die Kappe auch eine andere Form aufweisen. Die Kappe kann insbesondere eingerichtet sein, um einen medienbelasteten Raum, insbesondere den Druckraum, zu reduzieren, insbesondere um ein Volumen des Druckraums zu reduzieren. Die Kappe kann beispielsweise durch mindestens eine Klebung, beispielsweise mindestens eine Deckelklebung und/oder mindestens eine Dichteinheit, gegenüber einem anderen Raum abgedichtet sein. Die Kappe ist teilweise auf das Drucksensorelement und/ das Ausgleichselement aufgesetzt. Unter "aufgesetzt" kann insbesondere verstanden werden, dass die Kappe druckdicht aufgesetzt, beispielsweise verklebt und/oder verschweißt und/oder verlötet, ist. Zu einer Reduktion des Volumens des Druckraums und/oder einer Abdichtung des Druckraums kann beispielsweise auch eine Schwertklebung, beispielsweise verbunden mit dem Gehäuse und/oder dem Ausgleichselement und/oder dem Drucksensorelement, eingesetzt werden.

Die Vorrichtung kann bevorzugt als Differenzdrucksensor ausgestaltet sein. Unter dem Differenzdrucksensor kann insbesondere eine Vorrichtung verstanden werden, welche eingerichtet ist, um mindestens zwei, bevorzugt unterschiedliche, Drücke zu erfassen und/oder eine Druckdifferenz zu erfassen. Beispielsweise kann der erste Druck und/oder der zweite Druck, vorzugsweise simultan, beispielsweise gleichzeitig, erfasst werden und zusätzlich beispielsweise eine Differenz gebildet werden, beispielsweise durch mindestens eine Rechenoperation in mindestens einer Ansteuerung oder Auswertevorrichtung, welche von der erfindungsgemäßen Vorrichtung beispielsweise umfasst werden kann und/oder durch mechanische Differenzdruckbildung, insbesondere an einem Sensorelement, beispielsweise an dem Drucksensorelement, bevorzugt durch beidseitige Druckbeaufschlagung desselben, beispielsweise Beaufschlagung des ersten Drucks von einer Seite, beispielsweise von unten, und Beaufschlagung des zweiten Drucks von einer anderen Seite, beispielsweise von oben.

Das Drucksensorelement kann zumindest teilweise von dem Ausgleichselement umschlossen sein. Unter "umschlossen sein" kann insbesondere verstanden werden, dass mehr als eine Oberfläche des Drucksensorelements Verbindung zu dem Ausgleichselement haben kann. Beispielsweise kann das Drucksensorelement in das Ausgleichselement eingelassen sein. Beispielsweise kann das Ausgleichselement mindestens eine Aussparung für das Drucksensorelement, insbesondere zur Aufnahme des Drucksensorelements, aufweisen. Bevorzugt kann das Drucksensorelement derart in das Ausgleichselement eingelassen sein, dass, beispielsweise bei einem im Wesentlichen quaderförmigen Drucksensorelement, fünf Seiten des Drucksensorelements mit dem Ausgleichselement verbunden sind, bevorzugt derart, dass die Oberfläche des Drucksensorelements, welche nicht mit dem Ausgleichselement verbunden ist, bevorzugt in derselben Ebene liegt wie eine Oberfläche des Ausgleichselements.

Die Vorrichtung weist erfindungsgemäß mindestens einen Schaltungsträger zur Aufnahme mindestens einer mit dem Drucksensorelement verbundenen Ansteuer- und Auswerteschaltung auf. Der Schaltungsträger kann insbesondere ausgestaltet sein, um mindestens eine Ansteuerung und/oder mindestens eine Auswerteschaltung, beispielsweise eine elektrische und/oder elektronische Schaltung, zu tragen und/oder zu umfassen. Bei dem Schaltungsträger kann es sich beispielsweise um einen Keramikschaltungsträger handeln. Der Schaltungsträger kann über mindestens eine elektrische Verbindung mit dem Drucksensorelement verbunden, insbesondere kontaktiert, sein. Der Schaltungsträger kann beispielsweise als Leiterplatte ausgestaltet sein. Bei der Ansteuerschaltung und/oder der Auswerteschaltung kann es sich prinzipiell um eine Vorrichtung handeln, welche beispielsweise ausgestaltet ist, um das Drucksensorelement mit mindestens einem elektrischen Strom und/oder mindestens einer elektrischen Spannung zu beaufschlagen. Beispielsweise kann die Ansteuerschaltung und/oder die Auswerteschaltung mindestens eine Datenverarbeitungsvorrichtung umfassen und/oder mit mindestens einer Datenverarbeitungsvorrichtung verbunden sein. Beispielsweise kann die Auswerteschaltung und/oder die Ansteuerschaltung mindestens einen Speicher zur Speicherung mindestens eines Drucks, beispielsweise des ersten Drucks und/oder des zweiten Drucks, umfassen. Weiterhin kann die Ansteuerschaltung und/oder die Auswerteschaltung ausgestaltet sein, um mindestens eine Rechenoperation durchzuführen, beispielsweise eine Rechenoperation, um aus mindestens zwei Drücken einen Differenzdruck zu berechnen. Die Ansteuerschaltung und/oder die Auswerteschaltung kann beispielsweise mindestens ein Display zur Bedienung umfassen oder mit mindestens einem Display verbunden sein.

Weiterhin kann die Vorrichtung beispielsweise mindestens einen Sensorträger umfassen. Der Sensorträger kann ausgestaltet sein, um das Drucksensorelement und/oder das Ausgleichselement zu tragen und/oder zu umfassen. Auf dem Sensorträger kann beispielsweise das Drucksensorelement und/oder das Ausgleichselement montiert sein Der Sensorträger kann beispielsweise mindestens einen Kunststoff aufweisen. Der Sensorträger kann beispielsweise mindestens einen, bevorzugt mehrere, Trägerelemente aufweisen, welche beispielsweise mit mindestens einem Verbindungssteg miteinander verbunden sein können. Die Vorrichtung, insbesondere die Ansteuerschaltung und/oder die Auswerteschaltung, kann mindestens ein Auswertebauelement und/oder mindestens eine Sent-Schnittstelle und/oder mindestens eine NTC-Anbindung und/oder mindestens einen Kunststoffträger umfassen.

Das Ausgleichselement und der Schaltungsträger können zumindest teilweise, bevorzugt komplett, getrennt ausgestaltet sein. Unter "getrennt ausgestaltet" kann hierbei verstanden werden, dass zwischen Schaltungsträger und Ausgleichselement keine fluidische Verbindung besteht. Beispielsweise kann der Schaltungsträger zumindest teilweise von einem Schaltungsträgerraum umgeben sein. Das Ausgleichselement kann zumindest teilweise von dem Druckraum umgeben sein. Der Schaltungsträgerraum kann bevorzugt zumindest teilweise, bevorzugt komplett, getrennt von dem Druckraum ausgestaltet sein. Das Ausgleichselement und der Schaltungsträger können insbesondere derart zumindest teilweise getrennt ausgestaltet sein, dass der Schaltungsträgerraum und/oder der Schaltungsträger nicht medienbelastet werden kann. Unter "medienbelastet" kann hierbei eine Kontamination mit dem fluiden Medium verstanden werden.

Erfindungsgemäß ist das Ausgleichselement mit dem Drucksensorelement und dem Schaltungsträger in einem Trägerelement zusammengefasst. Unter einem Trägerelement kann insbesondere ein Element verstanden werden, welches ausgestaltet ist, um das Drucksensorelement und den Schaltungsträger und das Ausgleichselement zu tragen und/oder zu umfassen und/oder zu halten und/oder zu stützen. Das Trägerelement ist in das Gehäuse eingebracht. Das Trägerelement kann beispielsweise mindestens eine Auslassung aufweisen, um das Drucksensorelement und/oder das Ausgleichselement und/oder den Schaltungsträger aufzunehmen. Beispielsweise kann es sich bei dem Trägerelement und dem Sensorträger auch um dasselbe Element handeln.

Das Trägerelement kann beispielsweise mindestens einen Rahmen umfassen. Das Ausgleichselement und/oder der Schaltungsträger können beispielsweise mit dem Rahmen verbunden sein. Bei dem Rahmen kann es sich insbesondere um einen Teil des Trägerelements handeln, welcher eine andere Komponente, beispielsweise das Ausgleichselement und/oder den Schaltungsträger, von mindestens vier Seiten umfassen und/oder berühren kann. Der Rahmen kann beispielsweise aus Kunststoff und/oder Keramik ausgestaltet sein. Das Ausgleichselement und/oder der Schaltungsträger können insbesondere in den Rahmen eingelassen sein.

Das Trägerelement kann beispielsweise mit einer flachen, insbesondere dem Drucksensorelement gegenüberliegenden Seite, auf einer Innenwand des Gehäuses aufliegen. Insbesondere kann das Trägerelement eine Unterseite aufweisen, beispielsweise eine flache Seite, welche beispielsweise auf dem Boden, insbesondere der Innenwand, des Gehäuses aufliegen kann.

Im Rahmen der vorliegenden Erfindung kann weiterhin ein Verfahren zur Herstellung einer Vorrichtung zur Erfassung eines Drucks eines fluiden Mediums, insbesondere zur Herstellung der Vorrichtung wie oben beschrieben, beschrieben werden. Beispielsweise können mehrere Trägerelemente, beispielsweise jeweils mit mindestens einem Drucksensorelement und/oder mindestens einem Ausgleichselement, wie oben beschrieben, im Mehrfachnutzen hergestellt werden. Anschließend können diese Trägerelemente beispielsweise vereinzelt werden. Danach können die einzelnen Trägerelemente bevorzugt im Gehäuse, insbesondere in das Gehäuse, wie oben beschrieben, eingebracht werden. Besonders bevorzugt kann auch mindestens ein Abgleich und/oder mindestens eine Kalibration im Mehrfachnutzen durchgeführt werden.

Die vorgeschlagene Vorrichtung kann gegenüber bekannten Vorrichtungen der genannten Art eine Vielzahl von Vorteilen aufweisen. Beispielsweise kann die erfindungsgemäße Vorrichtung einen einfachen Aufbau aufweisen. Ein medienbelasteter Raum, insbesondere der Druckraum, kann relativ klein sein und bevorzugt ohne elektronische Bauteile, welche durch das fluide Medium kontaminiert werden könnten, ausgestaltet sein Der medienbelastete Raum, insbesondere der Druckraum, kann durch mindestens eine Deckelklebung abgedichtet werden. Teile der Vorrichtung können Kunststoff aufweisen, beispielsweise kann das Trägerelement als Kunststoffträger ausgestaltet sein, was beispielsweise einen Kostenvorteil bringen kann. Ein weiterer Kostenvorteil kann sich daraus ergeben, dass der Schaltungsträger als Leiterplatte ausgestaltet sein kann. Weiterhin kann eine Trennung des Schaltungsträgerraums von dem Druckraum, welcher üblicherweise medienbelastet sein kann, erreicht werden, wodurch eine Lebensdauer der Vorrichtung deutlich verlängert werden kann. Weiterhin kann die vorliegende Erfindung als Differenzdrucksensor und/oder als Absolutdrucksensor und/oder als Relativdrucksensor realisiert werden. Die Vorrichtung umfasst ein Trägerelement, wobei das Trägerelement den Schaltungsträger und das Ausgleichselement und das Sensorelement, insbesondere das Drucksensorelement umfasst. Das Trägerelement und der Schaltungsträger und das Ausgleichselement und das Sensorelement und das Drucksensorelement können direkt in das Gehäuse gebaut werden, wodurch bevorzugt ein Abgleich mit dem Gehäuse durchgeführt werden kann, wodurch sich beispielsweise einen Genauigkeitsvorteil ergeben kann. Das Trägerelement, insbesondere das Trägerelement, welches das Drucksensorelement und/oder das Ausgleichselement umfasst, beispielsweise als Elektronikmodul mit Trägerelement ausgestaltet, kann im Mehrfachnutzen, beispielsweise im Großnutzen, aufgebaut und/oder abgeglichen werden, wodurch sich ebenfalls ein Kostenvorteil gegenüber bekannten Vorrichtungen ergeben kann. Bei Realisierung einer Schwertklebung ist beispielsweise kein zusätzliches Bauteil zum Verschluss des Druckraums, insbesondere des medienbelasteten Raums, erforderlich, was beispielsweise ebenfalls einen Kostenvorteil erbringen kann. Der Gesamtbauraum kann durch eine Dichtfunktion des Deckels und/oder der Schwertklebung reduziert werden, beispielsweise derart, dass der Deckel ein Teil des Druckraums sein kann, insbesondere einen Abschluss des Druckraums. Der medienbelastete Raum, insbesondere der Druckraum, kann durch die Deckelklebung und/oder die Schwertklebung derart abgedichtet werden, dass vorzugsweise der Schaltungsträgerraum nicht medienbelastet, insbesondere nicht durch das fluide Medium kontaminiert, werden kann.

### Kurze Beschreibung der Zeichnungen

Ausführungsbeispiele der Erfindung sind in den Zeichnungen dargestellt und werden im Folgenden näher erläutert.

Es zeigen:
- Figuren 1A und 1B: eine Vorrichtung zur Erfassung eines Drucks eines fluiden Mediums;
- Figur 2: eine Vorrichtung zur Erfassung eines Drucks eines fluiden Mediums;
- Figur 3: eine Vorrichtung zur Erfassung eines Drucks eines fluiden Mediums;
- Figur 4: ein Ausführungsbeispiel einer erfindungsgemäßen Vorrichtung zur Erfassung eines Drucks eines fluiden Mediums;
- Figur 5: ein erfindungsgemäßes Ausführungsbeispiel eines Trägerelements; und
- Figur 6: Mehrfachnutzen zur Herstellung von Trägerelementen und/oder Ausgleichselementen und/oder Drucksensorelementen für Ausführungsbeispiele der erfindungsgemäßen Vorrichtung.

### Ausführungsformen der Erfindung

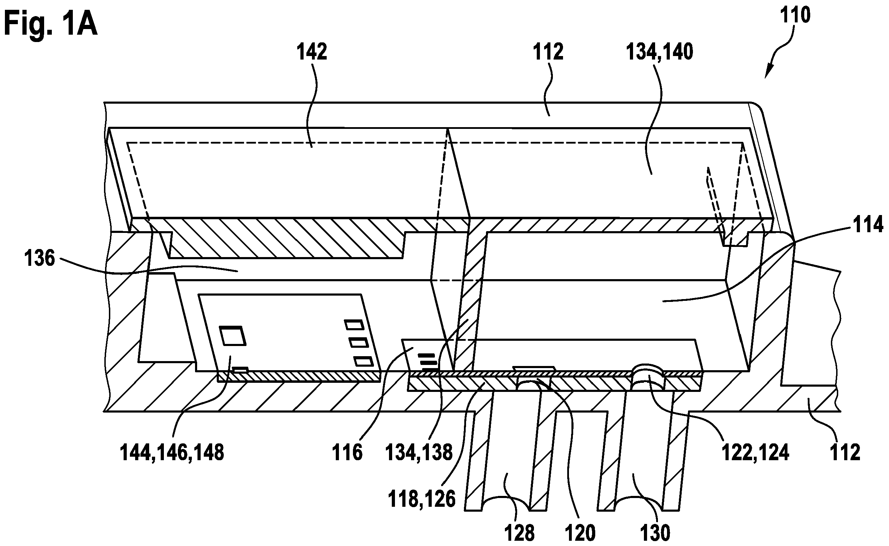

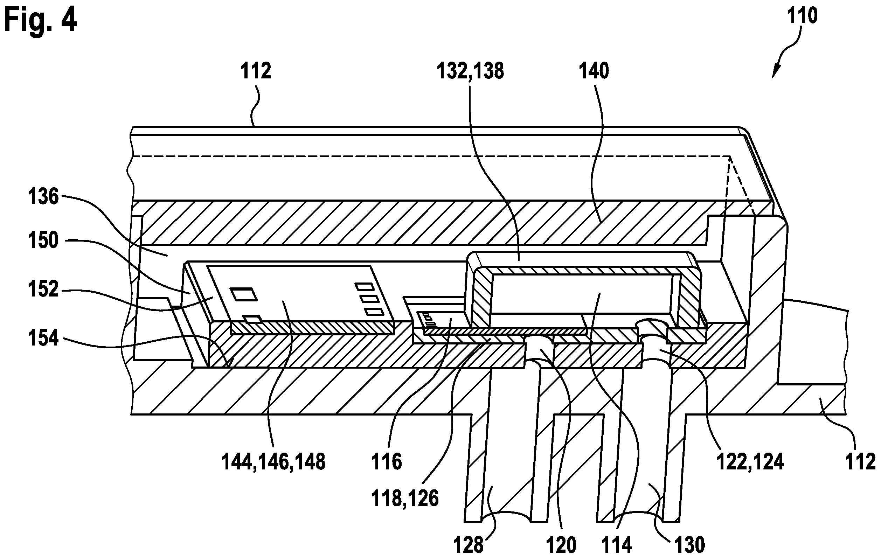

In den Figuren 1A, 1B, 2, 3 und 4 sind Vorrichtungen 110 zur Erfassung eines Drucks eines fluiden Mediums dargestellt, wobei von diesen nur die Fig. 4 eine erfindungsgemäße Vorrichtung offenbart. Die erfindungsgemäße Vorrichtung 110 weist mindestens ein Gehäuse 112 mit mindestens einem Druckraum 114 auf. Die Vorrichtung 110 kann beispielsweise als Niederdrucksensor ausgestaltet sein. Bei dem Druckraum 114 kann es sich insbesondere um einen Raum handeln, der keine elektronischen Bauteile umfasst. In dem Druckraum 114 ist mindestens ein Drucksensorelement 116 aufgenommen. Die Vorrichtung 110 weist weiterhin zwischen dem Gehäuse 112 und dem Drucksensorelement 116 mindestens ein Ausgleichselement 118 zum Ausgleich thermomechanischer Spannungen auf. Das Drucksensorelement 116 ist zumindest teilweise mit dem Ausgleichselement 118 verbunden. Das Ausgleichselement 118 weist mindestens eine erste Öffnung 120 auf. Das Drucksensorelement 116 ist über die erste Öffnung 120 mit einem ersten Druck beaufschlagbar. Das Ausgleichselement 118 weist weiterhin mindestens eine zweite Öffnung 122 auf. Über die zweite Öffnung 122 sind der Druckraum 114 und das Drucksensorelement 116 mit mindestens einem zweiten Druck beaufschlagbar.

Das Ausgleichselement 118 kann beispielsweise Keramik und/oder Glas aufweisen.

Die zweite Öffnung 122 kann bevorzugt eine Durchgangsöffnung 124 sein. Die zweite Öffnung 122 kann zumindest teilweise auch das Drucksensorelement 116 durchdringen. Das Drucksensorelement 116 kann bevorzugt die erste Öffnung 120 zumindest teilweise verschließen.

Das Ausgleichselement 118 kann beispielsweise als planares Element 126 ausgestaltet sein. Das Gehäuse 112 kann mindestens einen ersten Druckanschluss 128 aufweisen. Der erste Druckanschluss 128 kann mit der ersten Öffnung 120 verbunden sein. Das Gehäuse 112 kann weiterhin mindestens einen zweiten Druckanschluss 130 aufweisen. Der zweite Druckanschluss 130 kann mit der zweiten Öffnung 122 verbunden sein.

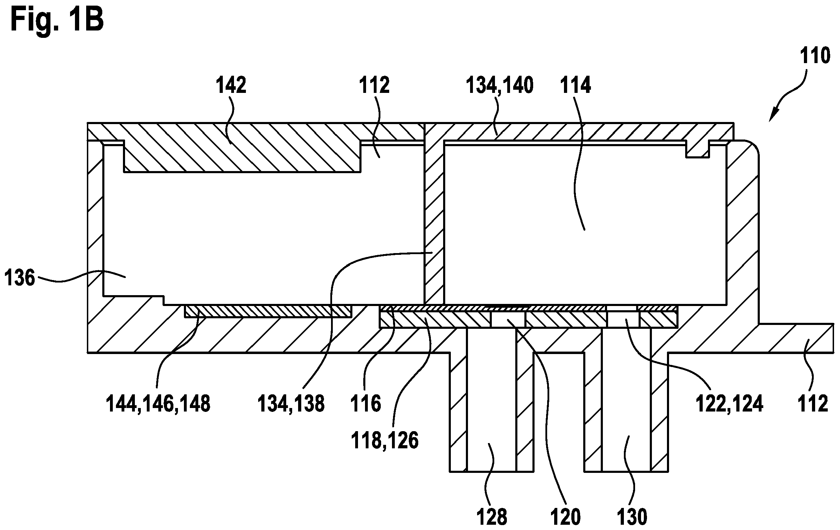

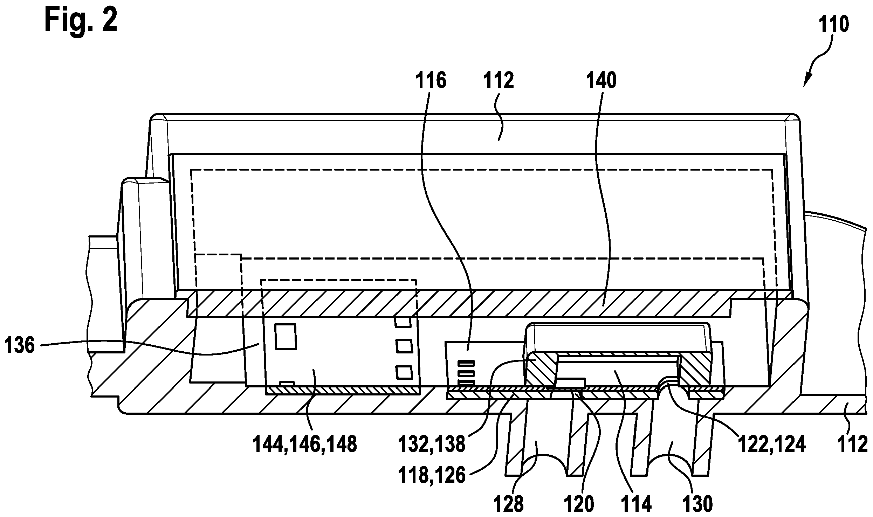

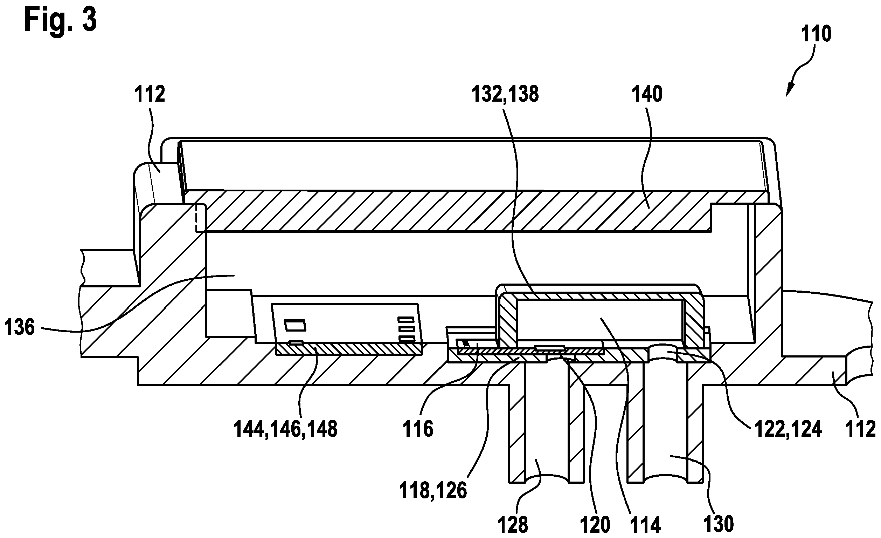

Der Druckraum 114 wird zumindest teilweise durch eine in das Gehäuse 112 eingebrachte Kappe 132 begrenzt, wie in den Figuren 2, 3 und 4 dargestellt. Die Kappe 132 ist teilweise auf das Drucksensorelement 116 und das Ausgleichselement 118 aufgesetzt, wie in der Fig. 4 dargestellt ist.. Durch die Kappe 132 kann, insbesondere als Vorteil der erfindungsgemäßen Vorrichtung 110, eine Kapselung eines Medienraums, insbesondere des Druckraums 114, erzielt werden. Die Kappe 132 kann beispielsweise den medienbelasteten Raum, insbesondere den Druckraum 114, stark reduzieren, insbesondere das Volumen des Druckraums 114 klein halten oder beliebig variieren. Je nach Montageart des Drucksensorelements 116, beispielsweise eines Sensorelements, kann die Kappe 132 beispielsweise in einer Ebene geklebt sein. Die Kappe 132 kann bevorzugt um das Drucksensorelement 116, beispielsweise einem Sensorelement, ausgespart sein, wie beispielsweise in Figur 3 dargestellt. Beispielsweise kann die Kappe 132 in einer Ebene geklebt sein oder das Drucksensorelement 116 kann in das Ausgleichselement 118 eingelassen sein. Insbesondere falls die Kappe 132 in einer Ebene geklebt ist, kann es vorteilhaft sein, das Drucksensorelement 116 groß genug auszugestalten, insbesondere derart, dass genügend Platz für Druckanschlüsse, beispielsweise den ersten Druckanschluss 128 und/oder den zweiten Druckanschluss 130 und/oder eine Kappenklebung, vorhanden sein kann. Die Kappe 132 kann zumindest teilweise eckig und/oder rund sein. Prinzipiell kann die Kappe 132 in jeder erforderlichen Form ausgeführt sein. Zusätzlich zu der Kappe 132 kann, wie in Figur 1A und 1B gezeigt, die Vorrichtung 110 mindestens ein Schwert 134 aufweisen. Die Kappe 132 und/oder das Schwert 134 können insbesondere eingerichtet sein, beispielsweise bei verschiedenen Aufbauvariationen und/oder Ausführungsbeispielen der Vorrichtung 110, beispielsweise von Niederdrucksensoren, um den medienbelasteten Raum, insbesondere den Druckraum 114, von mindestens einem anderen Raum, beispielsweise einem Elektronikraum 136, zu trennen, wie beispielsweise häufig erforderlich. Mit dem Schwert 134 kann, beispielsweise durch eine Schwertklebung, diese Trennung auf einfache und/oder kostengünstige Art realisiert werden. Das Schwert 134 und/oder mindestens eine andere Dichteinheit 138 können Teil eines Deckels, insbesondere eines Gehäusedeckels 140 sein. Bei dem Schwert 134 kann es sich insbesondere um ein Dichtschwert handeln. In den Ausführungsbeispielen gemäß Figur 4 kann mindestens ein Gehäusedeckel 140 Teil des Gehäuses 112 sein. Der Elektronikraum 136 kannmit mindestens einer weiteren Deckelhälfte 142 verschlossen sein. Das Schwert 134 und/oder die Dichteinheit 138 und/oder der Gehäusedeckel 140 und/oder die Deckelhälfte 142 können beispielsweise von dem Gehäuse 112 umfasst werden und/oder zumindest teilweise separat ausgestaltet sein oder zumindest teilweise mit dem Gehäuse 112 verbunden sein.
Die Vorrichtung 110kann beispielsweise als Differenzdrucksensor ausgestaltet sein.

Das Drucksensorelement 116 kann zumindest teilweise von dem Ausgleichselement 118 umschlossen sein. Insbesondere kann das Ausgleichselement 118 mindestens eine Aussparung für das Drucksensorelement 116 aufweisen, insbesondere um das Drucksensorelement 116 aufzunehmen.

Die Vorrichtung 110 weist einen Schaltungsträger 144 zur Aufnahme mindestens einer mit dem Drucksensorelement 116 verbundenen Ansteuerschaltung 146 und/oder Auswerteschaltung 148 auf.

Das Ausgleichselement 118 und der Schaltungsträger 144 können zumindest teilweise getrennt ausgestaltet sein. Prinzipiell können aber das Ausgleichselement 118 und der Schaltungsträger 144 auch als ein Element ausgestaltet sein. Beispielsweise können der Schaltungsträger 144 und das Ausgleichselement 118 auch zumindest teilweise, beispielsweise über das Gehäuse 112 oder direkt, miteinander verbunden sein.

Insbesondere kann beispielsweise ein Sensorträger, welcher beispielsweise das Drucksensorelement 116 und/oder das Ausgleichselement 118 umfasst, zumindest teilweise von mindestens einem Sensorraum, beispielsweise dem Druckraum 114, umgeben sein. Der Schaltungsträger 144 kann zumindest teilweise von einem Schaltungsträgerraum, beispielsweise dem Elektronikraum 136, umgeben sein. Der Schaltungsträgerraum kann bevorzugt getrennt von dem Sensorraum ausgestaltet sein, insbesondere derart, dass der Schaltungsträgerraum nicht medienbelastet werden kann. Bevorzugt kann der Sensorträger und/oder das Ausgleichselement 118 und/oder der Schaltungsträger 144 getrennt voneinander ausgestaltet sein. Die Trennung kann insbesondere eine Begrenzung der Medienbelastung auf den Raum der Kappe 132, insbesondere den Druckraum 114, ermöglichen.

Das Ausgleichselement 118 ist mit dem Drucksensorelement 116 und dem Schaltungsträger 144 in mindestens einem Trägerelement 150 zusammengefasst, wie n den Figuren 4, 5 und 6 dargestellt. Das Trägerelement 150 weist ebenfalls die erste Öffnung 120 und/oder die zweite Öffnung 122 auf, insbesondere derart, dass ein erster Druck über den ersten Druckanschluss 128 und das Trägerelement 150 und das Ausgleichselement 118 auf einer Unterseite des Drucksensorelements 116, beispielsweise auf einer Membran an der Unterseite des Drucksensorelements 116, beaufschlagt werden kann. Die zweite Öffnung 122 mit dem Trägerelement 150 kann insbesondere derart ausgestaltet sein, dass ein zweiter Druck über den zweiten Druckanschluss 130 und die Öffnung des Trägerelements 150 und die zweite Öffnung 122 des Ausgleichselements 118 und des Drucksensorelements 116 und den Druckraum 114 beaufschlagt werden kann. Bevorzugt kann eine Oberseite des Drucksensorelements 116, insbesondere eine Membran auf der Oberseite des Drucksensorelements 116, mit dem zweiten Druck beaufschlagt werden. Die Oberseite des Drucksensorelements 116 kann bevorzugt auf einer gegenüberliegenden Seite der Unterseite des Drucksensorelements 116 angeordnet sein. Das Trägerelement 150 ist in das Gehäuse 112 eingebracht. Wie in Figur 4 dargestellt ist, ist das Drucksensorelement 116 samt Ausgleichselement 118 auf das Trägerelement 150 und/ der Schaltungsträger 144 auf das Trägerelement 150 montiert. Das Trägerelement 150 kann beispielsweise Kunststoff umfassen und/oder einzelne Trägerelemente 150, welche beispielsweise durch Verbindungsstege miteinander verbunden sein können.

Das Trägerelement 150 kann mindestens einen Rahmen 152 umfassen. Das Ausgleichselement 118 und/oder der Schaltungsträger 144 können beispielsweise mit dem Rahmen 152 verbunden sein.

Das Trägerelement 150 kann mit einer flachen, beispielsweise dem Drucksensorelement 116 gegenüberliegenden Seite, auf einer Innenwand 154 des Gehäuses 112 aufliegen. Insbesondere durch diese Wendung des Ausgleichselements 118, insbesondere des thermomechanischen Ausgleichselements 118, kann beispielsweise ein Chip, insbesondere umfassend das Trägerelement 150 und/oder die Auswerteschaltung 148 und/oder die Ansteuerschaltung 146 und/oder den Schaltungsträger 144 und/oder die Kappe 132 und/oder das Drucksensorelement 116, auf das Ausgleichselement 118, bevorzugt anschließend in das Gehäuse 112, montiert werden oder montiert sein.

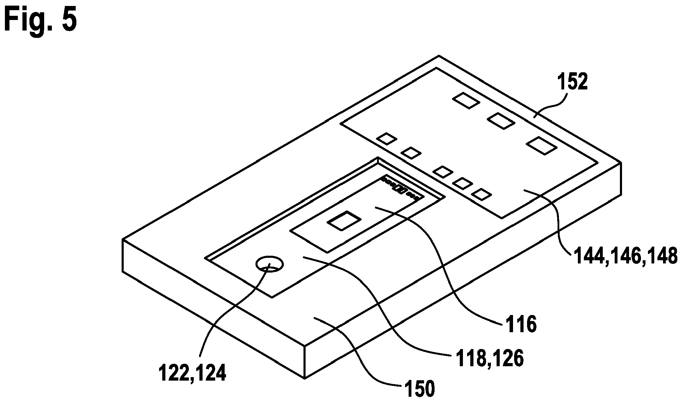

Im Vergleich zu Figur 1A, 1B und 2 ist in dem Ausführungsbeispiel gemäß Figur 4, 5 und 6 das Drucksensorelement 116, beispielsweise der Sensor, in dem Ausgleichselement 118 versenkt. In Figur 4 ist insbesondere ein Ausführungsbeispiel der erfindungsgemäßen Vorrichtung 110, insbesondere eine geschnittene Ansicht eines Aufbaukonzepts mit Kappe 132, beispielsweise als Differenzdrucksensor, dargestellt. Die Kappe 132 ist hierbei bevorzugt in einer Ebene geklebt. Das Drucksensorelement 116, beispielsweise der Sensor, ist vorzugsweise in diesem Ausführungsbeispiel in das Ausgleichselement 118 versenkt. In Figur 5 ist exemplarisch ein Trägerelement 150 mit Ausgleichselement 118, Drucksensorelement 116, beispielsweise dem Sensorelement, und dem Schaltungsträger 144 dargestellt, wie es beispielsweise in Ausführungsbeispielen erfindungsgemäßer Vorrichtungen 110 verwendet werden kann. Die Kappe 132 für den Druckraum 114 ist in Figur 5 insbesondere nicht eingezeichnet, kann aber prinzipiell vorhanden sein.

Insbesondere kann mindestens eine Durchgangsbohrung, beispielsweise als erste Öffnung 120 und/oder zweite Öffnung 122, beispielsweise in dem Ausgleichselement 118 und/oder in dem Drucksensorelement 116, zur Druckzufuhr vorgesehen sein, insbesondere zur Druckzufuhr des ersten Druckes und/oder des zweiten Druckes, beispielsweise auf die Rückseite des Ausgleichselements 118, insbesondere auf eine den Druckanschlüssen, insbesondere dem ersten Druckanschluss 128 und/oder dem zweiten Druckanschluss 130, entgegengesetzte Seite des Ausgleichselements 118, beispielsweise neben einer Sacklochausnehmung unter der Membran des eigentlichen Sensorelements, insbesondere des Drucksensorelements 116. Bevorzugt kann über die erste Öffnung 120 eine Unterseite des Sensorelements mit einem ersten Druck beaufschlagt werden und/oder über die zweite Öffnung 122 eine Oberseite des Drucksensorelements 116 mit einem Druck, insbesondere dem zweiten Druck, beaufschlagt werden. Die Unterseite kann bevorzugt entgegengesetzt der Oberseite an dem Drucksensorelement 116 angeordnet sein. Bei der Unterseite und/oder der Oberseite kann es sich bevorzugt um Oberflächen handeln, welche beispielsweise mindestens eine Membran zur Erfassung des ersten Drucks und/oder des zweiten Drucks aufweisen.

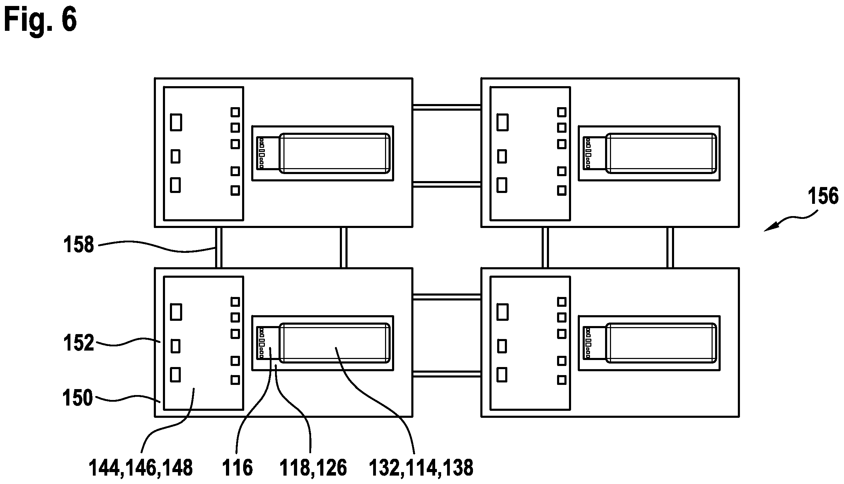

Bei einem Verfahren zur Herstellung einer Vorrichtung 110, insbesondere beispielsweise der erfindungsgemäßen Vorrichtung 110, wie oben beschrieben, können beispielsweise mehrere Trägerelemente 150, beispielsweise ein Trägerelement 150 wie in Figur 5 dargestellt, im Mehrfachnutzen 156, beispielsweise wie in Figur 6 dargestellt, hergestellt werden. Figur 6 zeigt insbesondere ein Trägerelement 150 mit mindestens einem Ausgleichselement 118 und/oder mindestens einem Drucksensorelement 116 und/oder mindestens einem anderen Sensorelement und/oder mindestens einen Schaltungsträger 144, insbesondere vier Ausgleichselemente 118 und vier Drucksensorelemente 116 und vier Schaltungsträger 144. Dargestellt ist insbesondere der Mehrfachnutzen 156, wobei beispielsweise in dem Verfahren zur Herstellung der Vorrichtung 110 das Trägerelement 150 vereinzelt werden kann und, insbesondere vier Trägerelemente 150, in ein Gehäuse 112, beispielsweise wie oben beschrieben, eingebracht werden können. Insbesondere kann auch ein Abgleich im Mehrfachnutzen durchgeführt werden. Insbesondere können die aufgebauten Teile der Vorrichtung 110 abgeglichen werden. Der Abgleich kann bevorzugt nach dem Aufbau, insbesondere zusammen mit dem kompletten Schaltungsträger144, möglich sein. Dies kann insbesondere höhere Genauigkeiten, beispielsweise durch eine Berücksichtigung von Gehäuseeinflüssen, erlauben. Beispielsweise kann ein Abgleich in Mehrfachnutzen erfolgen. Der Abgleich in Mehrfachnutzen kann einen Abgleichaufwand und damit Abgleichkosten reduzieren. Der Mehrfachnutzen 156 kann insbesondere vier Trägerelemente 150, welche beispielsweise durch jeweils zwei Verbindungen 158 mit jeweils zwei anderen Trägerelementen 150 verbunden sein können, aufweisen. Insbesondere kann durch die Verwendung des Trägerelements 150 diese Möglichkeit zum Abgleich im Mehrfachnutzen erzielt werden. Bei der Herstellung der erfindungsgemäßen Vorrichtung 110 kann durch die Verwendung des thermomechanischen Ausgleichselements 118 der Chip, insbesondere das Drucksensorelement 116, auf das Ausgleichselement 118 und anschließend in das Gehäuse 112 montiert werden. Je nach Montageart des Drucksensorelements 116 kann die Kappe 132 beispielsweise in einer Ebene geklebt werden und/oder das Ausgleichselement 118 kann um das Drucksensorelement 116 ausgespart werden. Der Abgleich kann beispielsweise nach dem Aufbau, insbesondere nach der Herstellung, beispielsweise zusammen mit dem kompletten Schaltungsträger 144, erfolgen, was beispielsweise höhere Genauigkeiten, insbesondere durch eine Berücksichtigung von Gehäuseeinflüssen, erlauben kann. In einer anderen Variante dieser Erfindung kann der Abgleich in Mehrfachnutzen erfolgen. Der Abgleich in Mehrfachnutzen kann insbesondere den Abgleichaufwand und/oder, insbesondere damit, Abgleichkosten reduzieren. Realisierbar kann diese Variante insbesondere sein, falls das Drucksensorelement 116 samt Ausgleichselement 118 auf das Trägerelement 150 montiert werden und der Schaltungsträger 144 ebenfalls auf das Trägerelement 150 montiert wird, wie beispielsweise in den Figuren 4 und 6 dargestellt. Das Trägerelement 150 kann insbesondere zumindest teilweise aus Kunststoff und/oder einzelnen Trägerelementen 150 aufgebaut sein, welche beispielsweise durch Verbindungsstege, insbesondere durch Verbindungen 158, miteinander verbunden sein können, insbesondere im Mehrfachnutzen 156. Dies kann insbesondere einen Aufbau, beispielsweise eine Herstellung, und/oder den Abgleich als Mehrfachnutzen, wie in Figur 6 dargestellt, ermöglichen. Bevorzugt werden die komplett aufgebauten Trägerelemente 150 beispielsweise erst vor dem Einbau in das Gehäuse 112 vereinzelt. Die Kappe 132 kann optional in einer Ebene geklebt sein. Das Drucksensorelement 116 kann in das Ausgleichselement 118 versenkt werden. Der Elektronikraum 136 kann mit der weiteren Deckelhälfte 142 verschlossen werden.

## Patentansprüche

1. Vorrichtung (110) zur Erfassung eines Drucks eines fluiden Mediums, wobei die Vorrichtung (110) mindestens ein Gehäuse (112) mit mindestens einem Druckraum (114) aufweist, wobei in dem Druckraum (114) mindestens ein Drucksensorelement (116) aufgenommen ist, wobei die Vorrichtung (110) weiterhin zwischen dem Gehäuse (112) und dem Drucksensorelement (116) mindestens ein Ausgleichselement (118) zum Ausgleich thermomechanischer Spannungen aufweist, wobei das Drucksensorelement (116) zumindest teilweise mit dem Ausgleichselement (118) verbunden ist,
wobei das Ausgleichselement (118) mindestens eine erste Öffnung (120) aufweist, wobei das Drucksensorelement (116) über die erste Öffnung (120) mit einem ersten Druck beaufschlagbar ist und wobei das Ausgleichselement (118) weiterhin mindestens eine zweite Öffnung (122) aufweist, wobei über die zweite Öffnung (122) der Druckraum (114) und das Drucksensorelement (116) mit mindestens einem zweiten Druck beaufschlagbar sind, wobei der Druckraum (114) zumindest teilweise durch eine in das Gehäuse (112) eingebrachte Kappe (132) begrenzt wird, wobei die Kappe (132) teilweise auf das Drucksensorelement (116) und das Ausgleichselement (118) aufgesetzt ist, **dadurch gekennzeichnet, dass** die Vorrichtung (110) mindestens einen Schaltungsträger (144) zur Aufnahme mindestens einer mit dem Drucksensorelement (116) verbundenen Ansteuer (146)- und Auswerteschaltung (148) aufweist, wobei das Ausgleichselement (118) mit dem Drucksensorelement (116) und dem Schaltungsträger (144) in einem Trägerelement (150) zusammengefasst ist, wobei das Trägerelement (150) in das Gehäuse (112) eingebracht ist, wobei das Trägerelement (150) ebenfalls die erste Öffnung (120) und die zweite Öffnung (122) aufweist, wobei das Ausgleichselement (118) eingerichtet ist, um mechanische Spannungen zwischen dem Drucksensorelement und dem Trägerelement (150) zu reduzieren oder zu verhindern und wobei das Ausgleichselement ausschließlich Materialien umfasst, deren thermischer Ausdehnungskoeffizient zwischen dem thermischen Ausdehnungskoeffizient des Trägerelementes und dem thermischen Ausdehnungskoeffizienten des Drucksensorelements liegt.

2. Vorrichtung (110) nach dem vorhergehenden Anspruch, wobei die zweite Öffnung (122) eine Durchgangsöffnung (124) ist.

3. Vorrichtung (110) nach einem der vorhergehenden Ansprüche, wobei das Drucksensorelement (116) die erste Öffnung (120) zumindest teilweise verschließt.

4. Vorrichtung (110) nach einem der vorhergehenden Ansprüche, wobei das Ausgleichselement (118) als planares Element (126) ausgestaltet ist.

5. Vorrichtung (110) nach einem der vorhergehenden Ansprüche, wobei das Gehäuse (112) mindestens einen ersten Druckanschluss (128) aufweist, wobei der erste Druckanschluss (128) mit der ersten Öffnung (120) verbunden ist, wobei das Gehäuse (112) weiterhin mindestens einen zweiten Druckanschluss (130) aufweist, wobei der zweite Druckanschluss (130) mit der zweiten Öffnung (122) verbunden ist.

6. Vorrichtung (110) nach einem der vorhergehenden Ansprüche, wobei die Vorrichtung (110) als Differenzdrucksensor ausgestaltet ist.

7. Vorrichtung (110) nach dem vorhergehenden Anspruch, wobei das Trägerelement (150) mindestens einen Rahmen (152) umfasst, wobei das Ausgleichselement (118) und der Schaltungsträger (144) mit dem Rahmen (152) verbunden sind.

## Claims

1. Device (110) for detecting a pressure of a fluid medium, the device (110) having at least one housing (112) with at least one pressure chamber (114), at least one pressure sensor element (116) being accommodated in the pressure chamber (114), the device (110) further having, between the housing (112) and the pressure sensor element (116), at least one compensating element (118) to compensate for thermomechanical stresses, the pressure sensor element (116) being at least partly connected to the compensating element (118),
the compensating element (118) having at least one first opening (120), wherein a first pressure can be applied to the pressure sensor element (116) via the first opening (120), and the compensating element (118) further having at least one second opening (122), wherein at least one second pressure can be applied to the pressure chamber 1 (114) and the pressure sensor element (116) via the second opening (122), the pressure chamber (114) being at least partly delimited by a cap (132) introduced into the housing (112), the cap (132) being placed partly on the pressure sensor element (116) and the compensating element (118), **characterized in that** the device (110) has at least one circuit carrier (144) to receive at least one drive (146) and evaluation circuit (148) that is connected to the pressure sensor element (116), wherein the compensating element (118) is combined with the pressure sensor element (116) and the circuit carrier (144) in a carrier element (150), wherein the carrier element (150) is introduced into the housing (112), wherein the carrier element (150) likewise has the first opening (120) and the second opening (122), wherein the compensating element (118) is configured to reduce or to prevent mechanical stresses between the pressure sensor element and the carrier element (150), and wherein the compensating element comprises only materials of which the thermal expansion coefficient lies between the thermal expansion coefficient of the carrier element and the thermal expansion coefficient of the pressure sensor element.

2. Device (110) according to the preceding claim, wherein the second opening (122) is a passage opening (124).

3. Device (110) according to one of the preceding claims, wherein the pressure sensor element (116) at least partly closes the first opening (120).

4. Device (110) according to one of the preceding claims, wherein the compensating element (118) is configured as a planar element (126).

5. Device (110) according to one of the preceding claims, wherein the housing (112) has at least one first pressure connection (128), wherein the first pressure connection (128) is connected to the first opening (120), wherein the housing (112) further has at least one second pressure connection (130), wherein the second pressure connection (130) is connected to the second opening (122).

6. Device (110) according to one of the preceding claims, wherein the device (110) is configured as a differential pressure sensor.

7. Device (110) according to the preceding claim, wherein the carrier element (150) comprises at least one frame (152), wherein the compensating element (118) and the circuit carrier (144) are connected to the frame (152).

## Revendications

1. Dispositif (110) pour déterminer une pression d'un milieu fluide, le dispositif (110) présentant au moins un boîtier (112) avec au moins un espace de pression (114), au moins un élément de capteur de pression (116) étant reçu dans l'espace de pression (114), le dispositif (110) présentant en outre, entre le boîtier (112) et l'élément de capteur de pression (116), au moins un élément de compensation (118) pour compenser les tensions thermomécaniques, l'élément de capteur de pression (116) étant connecté au moins en partie à l'élément de compensation (118),
l'élément de compensation (118) présentant au moins une première ouverture (120), l'élément de capteur de pression (116) pouvant être sollicité par le biais de la première ouverture (120) avec une première pression et l'élément de compensation (118) présentant en outre au moins une deuxième ouverture (122), l'espace de pression (114) et l'élément de capteur de pression (116) pouvant être sollicités par le biais de la deuxième ouverture (122) avec au moins une deuxième pression, l'espace de pression (114) étant limité au moins en partie par un capuchon (132) introduit dans le boîtier (112), le capuchon (132) étant posé en partie sur l'élément de capteur de pression (116) et sur l'élément de compensation (118), **caractérisé en ce que** le dispositif (110) présente au moins un support de circuit (144) pour recevoir au moins un circuit de commande (146) et d'analyse (148) connecté à l'élément de capteur de pression (116), l'élément de compensation (118) étant réuni à l'élément de capteur de pression (116) et au support de circuit (144) dans un élément de support (150), l'élément de support (150) étant introduit dans le boîtier (112), l'élément de support (150) présentant également la première ouverture (120) et la deuxième ouverture (122), l'élément de compensation (118) étant prévu pour réduire ou empêcher des contraintes mécaniques entre l'élément de capteur de pression et l'élément de support (150) et l'élément de compensation comprenant exclusivement des matériaux dont le coefficient de dilatation thermique est compris entre le coefficient de dilatation thermique de l'élément de support et le coefficient de dilatation thermique de l'élément de capteur de pression.

2. Dispositif (110) selon la revendication précédente, dans lequel la deuxième ouverture (122) est une ouverture de passage (124).

3. Dispositif (110) selon l'une quelconque des revendications précédentes, dans lequel l'élément de capteur de pression (116) ferme au moins en partie la première ouverture (120).

4. Dispositif (110) selon l'une quelconque des revendications précédentes, dans lequel l'élément de compensation (118) est configuré sous forme d'élément plan (126).

5. Dispositif (110) selon l'une quelconque des revendications précédentes, dans lequel le boîtier (112) présente au moins un premier raccord de pression (128), le premier raccord de pression (128) étant connecté à la première ouverture (120), le boîtier (112) présentant en outre au moins un deuxième raccord de pression (130), le deuxième raccord de pression (130) étant connecté à la deuxième ouverture (122).

6. Dispositif (110) selon l'une quelconque des revendications précédentes, dans lequel le dispositif (110) est configuré sous forme de capteur de pression différentielle.

7. Dispositif (110) selon la revendication précédente, dans lequel l'élément de support (150) comprend au moins un cadre (152), l'élément de compensation (118) et le support de circuit (144) étant connectés au cadre (152).
